# EUROPÄISCHE PATENTANMELDUNG

(11) **EP 0 688 621 A1**
(43) Veröffentlichungstag der Anmeldung: **27.12.1995**
(21) Anmeldenummer: 95109801.1
(22) Anmeldetag: 23.06.1995
(51) Int. Cl.: B23B 51/00

(54) **Bohrer**

(30) Priorität: 25.06.1994 DE 4421922
(71) Anmelder: MAS Vertriebsgesellschaft für Zerspanungstechnik mbH, D-71229 Leonberg (DE)
(72) Erfinder: Schmigalla, Christian, D-71229 Leonberg (DE); Schmigalla, Jochen, D-71229 Leonberg (DE)
(74) Vertreter: Petra, Elke, Dipl.-Ing.

(57) **Zusammenfassung**

Es wird ein Bohrer, insbesondere ein VHM-Bohrer für die Einbringung mit großen Bohrtiefen ins volle Werkstückmaterial beschrieben, mit zwei Schneiden, geradegenutet, mit innerer Kühlmittelzuführung und vier Führungsfasen, wovon zwei gleichzeitig schneidend sind, bei dem wesentlich ist, daß im vorderen End-Bereich seines aktiven Teils am jeweiligen Schneidenrücken der Reibschneiden (8) mindestens eine zusätzliche axiale Reibschneide (16) vorgesehen ist, wodurch ein "Reibkopf" mit mindestens zwei weiteren, schneidfähigen Führungsfasen (17) ausgebildet ist. Von besonderem Vorteil ist die Anordnung von jeweils drei zusätzlichen Reibschneiden (16) in 30°- Beabstandung, wodurch ein Achtfasenbohrer mit acht schneidfähigen Führungsfasen erhalten wird.

## Beschreibung

Die Erfindung bezieht sich auf einen Bohrer, insbesondere einen VHM-Bohrer für große Bohrtiefen nach dem Oberbegriff des Patentanspruchs 1.

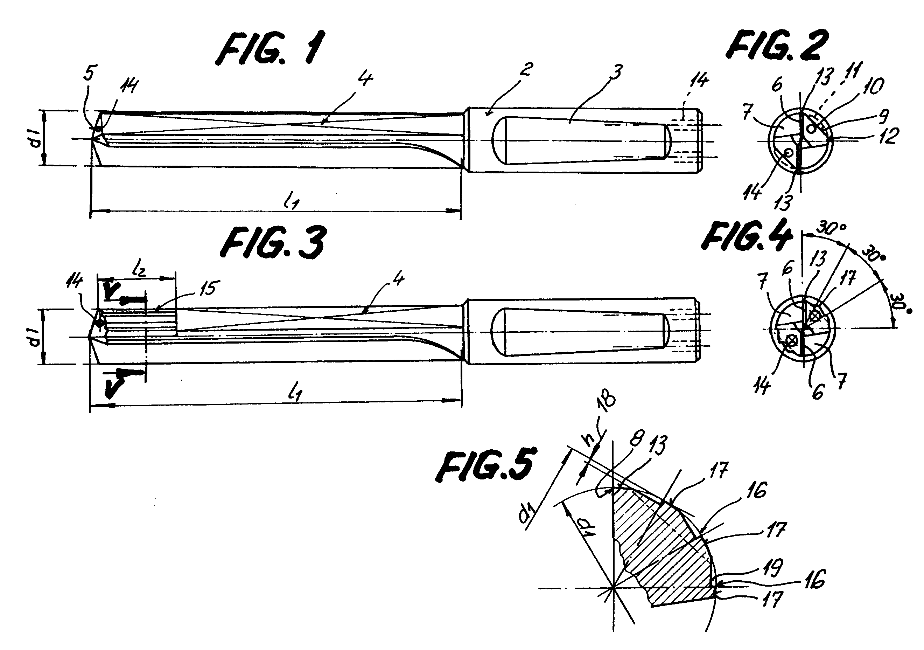

Ein solcher Bohrer ist beispielsweise aus dem Prospekt "BIAX Power-Drill" der Firma BIAX-Werkzeuge GmbH & Co. Präzisionswerkzeugfabrik, bekannt. Dieser Bohrer ist ein Vollhartmetallbohrer mit zwei Schneiden, geradegenutet, mit innerer Kühlmittelzuführung, einem normalen Spitzenwinkel von 140° und vier Führungsphasen (siehe hier auch Angaben zu Power-Drill TC 5507), von denen zwei schneidend sind. Ein solches Werkzeug ist auch in den Fig. 1 und 2 der anliegenden Zeichnung beschrieben. Die zwischen den diagonal gegenüberliegenden, geraden Spannuten vorhandenen Umfangs-Bohrerkorperabschnitt/Schneidenrücken sind mit je einer sehnenartig ausgeführten Anflachung versehen, so daß jeweils nur in Schneidenhöhe und 90° versetzt zu diesen, relativ schmale d1-Führungsfasen stehenbleiben. Die für die innere Kühlmittelzuführung vorgesehenen axialen Bohrungen öffnen stirnseitig und die austretende Kühlflüsskeit dient sowohl der Kühlung der beiden stirnseitigen Schneiden als auch dem Transport der Späne durch die beiden Nuten. Dadurch daß jedoch relativ große Anflachungen an den beiden Schneidenrücken vorgesehen sind, entstehen beträchtliche axiale Hohlräume bzw. Kanäle. Insbesondere wenn die Nuten mit Spänen vollgesetzt sind, wird die Kühlflüssigkeit widerstandsfrei über die Anflachungskanäle abfließen, so daß der Spänetransport nicht oder nur ungenügend erfolgt. Die Folge davon ist eine Qualitätsminderung der Bohrung, bzw. ein früher Bohrerbruch.

Um diesem Nachteil zu begegnen wurde dazu übergegangen, die Anflachungen wegzulassen. Dadurch wird jedoch ein großer Kontakt mit der Folge eines erhöhten Druckverhaltens erzielt und damit im Zusammenhang eine zusätzliche Erwärmung.

Um auch diesen Nachteil zu beseitigen bzw. zumindest zu verringern, werden statt einer großen Anflachung je Schneidenrücken mehrere kleinere Anflachungen auf dem Umfang angeordnet, so daß eine polygonale gebrochene Umfangslinie erhalten wird. Diese polygonale Anflachung verringert zwar die Durchtrittsmöglichkeit für die Kühlflüssigkeit. Dadurch daß sie aber in bezug auf den Durchmesser d1 insgesamt radial zurückgesetzt sind, bieten sie keine Möglichkeit der radialen Anstützung, können somit die Rolle von weiteren Führungsfasen nicht erfüllen.

Desweiteren ist aus der DE-PS 27 50 705 ein kombiniertes Reib-und Bohrwerkzeug bekannt, das eine maßgenaue Bearbeitung von Vorbohrungen, die insbesondere in Graugußstücken vorgegossen werden, dienen. Dieses bekannte Werkzeug weist ein vorderes Schneidende und eine axial etwas von diesem zurückgesetzte Reibstufe auf. Beide Stufen sind hartmetallbestückt, d.h., die vordere Schneidstufe weist zwei HM-Wendeplatten auf, während die Schneiden der Reibstufe mit HM-Platten versehen sind. Den beiden vorderen Schneiden sind jeweils eine tiefe Spankammer zugeordnet, die einen im wesentlichen axialen Verlauf haben und hinter der Reibstufe, hinter der das Werkzeug in einen Schaft geringeren Durchmessers übergeht, enden. Die Reibschneiden der beiden Hauptschneiden und der jeweiligen weiteren beiden Reibschneiden, die in Umfangsrichtung auf die Hauptreibschneiden folgen, weisen jeweils einen schneidenden Freiwinkel auf, wie dies bei Reibahlen bekannt ist. Auch ist der jeweilige Schneidenrücken hinter den HM-Platten weiter radial zurückgesetzt. Zudem sind vor den HM-Platten der vier Neben-Reibschneiden jeweils relativ tiefe (Neben-) Spannkammern zum Abgang der Späne vorgesehen. Auch noch so kurze Führungsphasen, die das Maß des Bohrungsdurchmessers d1 aufweisen, sind bei keiner der sechs Reibschneiden dieses bekannten Werkzeugs vorhanden, so daß eine echte Führung durch die Reibschneiden nicht gegeben ist, sondern lediglich ein schneidendes Sich-Abstützen.

Für die Einbringung von Bohrungen mit großen Bohrtiefen ins volle Werkzeugmaterial ist dieses bekannte Bohrwerkzeug nicht geeignet, da
- bereits die stirnseitigen HM-Schneiden nicht weit genug nach innen reichend ausgebildet sind,
- keine Kühlung durch entsprechende Kühlflüssigkeit vorgesehen ist,
- auch bei Einbringung von Kühlflüssigkeit, durch das hohe Spanaufkommen beim Bohren ins volle Werkstückmaterial ein sicherer Abtransport der Späne nicht stattfinden könnte. Die tiefen Hauptspankammern 10 vor den beiden Hauptschneiden sind mit 60° zu klein und die zusätzlichen Spankammern 12 vor den Neben-Reibschneiden sind zum Abtransport von größeren Spänen auch zu klein und zum unaktiven Abfließen der Kühlflüssigkeit wiederum zu groß.

Auch würde durch die sechs Reibschneiden, die keine richtigen Führungsphasen aufweisen, die Qualität tiefer Bohrungen, insbesondere deren Rundheit, leiden. Abgesehen davon, kann mit dem bekannten Werkzeug die Bohrung nicht bis praktisch auf den Bohrlochgrund mit Reibqualität gearbeitet werden, da die Reibschneiden nicht bis an die vordere Stirnfläche des Werkzeuge heranreichen, wegen der axial zurückgesetzten Anordnung deren Reibstufe.

Es ist somit festzuhalten, daß diese Druckschrift ein Ausbohrwerkzeug zeigt, das nur für Werkstücke, insbesondere Graugußwerkstücke, Verwendung findet, in denen bereits Löcher/Bohrungen vorhanden sein müssen. Diese Vorlöcher werden dann durch die vorderen Feinwendeplatten größer und durch die nachfolgenden HM-Schneiden der Reibstufe nochmals größer und auf das vorgegebene Fertigmaß gerieben. Dieses bekannte Werkzeug ist somit ein Reibwerkzeug mit zwei Wendeplatten-Vorschneiden für die Bearbeitung vorhandener, vorgegossener Löcher.

Aufgabe der Erfindung ist es, einen Bohrer obengenannter Gattung anzugeben, der eine optimale Führung des Bohrers, verbunden mit einer ebenfalls optimalen Kühlung und Späneabfuhr und einer verbesserter Bohrungsqualität (Reibqualität) sicherstellt.

Diese Aufgabe wird durch einen Bohrer mit den kennzeichnenden Merkmalen des Anspruchs 1 gelöst. In den Unteransprüchen werden vorteilhafte Ausgestaltungen dieses Bohrers beschrieben.

Demgemäß sind im vorderen Bereich des aktiven Teiles des Bohrers mindestens je eine zusätzliche axiale Reibschneide pro Schneidrücken so angeordnet, daß mindestens zwei weitere schneidfähige Führungsfasen vorgesehen sind, wodurch ein "Reibkopf" ausgebildet wird.

Diese Reibschneiden bzw. der Reibkopf sind vorzugsweise auf einer Länge 12 von ca. 1,5 d1 (d1 bezeichnet den Bohrerdurchmesser) vorgesehen. Hierdurch wird eine gute Führung des Bohrers sichergestellt. In diesem Reibkopfbereich 12 kann auch ein positiver Spiralwinkel bis zu 15° ausgeführt sein. Die zusätzlichen Reibschneiden weisen dann ebenfalls den gleichen Spiralwinkel auf.

Die zusätzlichen Reibschneiden sind somit in dem Bereich von 1,5 d1 um 180° gegenüberliegend, d. h. diagonal gegenüberliegend auf dem Schneidenrücken der Hauptreibschneiden, also in einem Winkelbereich von jeweils 90° im Durchmesserbereich von d1 angeordnet. Die Anzahl und Aufteilung dieser Schneiden kann bedarfsweise variabel gestaltet sein und kann gleich und ungleich geteilt sein. Vorteilhaft ist, wenn die Aufteilung in Winkeln von jeweils 30° von den Hauptschneiden rückversetzt angeordnet sind, so daß dann eine gleichmäßige Aufteilung der Elemente erhalten wird.

Durch die zusätzlichen Reibschneiden ergeben sich am Umfang zusätzliche Führungsfasen, so daß gegenüber dem bisherigen "Vierfasenbohrer", d.h. dem Bohrer mit vier Führungsfasen, z.B. ein "Achtfasenbohrer" entsteht, d. h. ein Bohrer mit acht Führungsfasen.

Da diese zusätzlichen Reibschneiden nicht in der axialen Spanabtragung, sondern nur radial gering zum Einsatz kommen, können sie sehr klein in der Tiefe ausgeführt sein. So ist von Vorteil, wenn deren Schneidentiefe "h", selbstverständlich insbes. in Abhängigkeit vom Bohrerdurchmesser d1, 0,1 - 0,5 mm beträgt.

So wird erfindungsgemäß verhindert, daß das Kühlmittel nutzlos im Rücken der Schneiden abläuft. Das Kühlmittel wird durch die erfindungsgemäße Anordnung des "Reibkopfes" gezwungen, die Späne durch die beiden axialen Spannuten zu transportieren.

Durch die zusätzlichen Reibschneiden wird zudem die Bohrungsgualität um ein Mehrfaches erhöht. Durch die pro Reibschneide sich ergebenden zusätzlichen Führungsfasen auf dem Durchmesser d1, wird die Zentrierung des Bohrers in der Bohrung erhöht, wodurch ein Verlaufen des Bohrers auch bei tiefen Bohrungen wesentlich reduziert wird.

Im Falle der Ausführung eines erfindungsgemäßen Bohrers als Stufenbohrer kann bei Beginn einer jeden Stufe ein erfindungsgemäßer Reibkopfteil vorgesehen werden. Hier kann dann die Länge des Reibschneiden-Bereichs jeweils kürzer ausgelegt werden, da dann nicht nur eine, sondern mehrere Führungsabschnitte in axialer Beabstandung zueinander angeordnet sind.

Nachfolgend wir die Erfindung anhand eines Ausführungsbeispiels im direkten Vergleich zu einer Ausführungsform gemäß Stand der Technik unter Bezug auf die Zeichnung näher erläutert.

Es zeigt:
- Fig. 1: eine Draufsicht auf einen VHM-Bohrer gemäß Stand der Technik, mit gerader Spannut,
- Fig. 2: eine Stirnansicht auf den Bohrer gemäß Fig. 1,
- Fig. 3: eine Draufsicht wie in Fig. 1, auf einen erfindungsgemäßen Bohrer mit "Reibkopf",
- Fig. 4: eine Stirnansicht des Bohrers gemäß Fig. 3, und
- Fig. 5: eine teilweise Schnittansicht gemäß den Linien V-V aus Fig.3.

Der in Fig. 1 und 2 dargestellte Bohrer gemäß Stand der Technik weist in an sich bekannter Weise eine Zweiteilung auf. Er besteht also aus einem an seinem rückwärtigen Ende vorgesehenen Schaft 2, der in dieser Ausführungsform ein Zylinderschaft ist und eine Spannfläche 3, die hier eine geneigte Ausführungsform aufweist, besitzt. Der vordere Bohrerteil ist der schneidende, aktive Teil, mit der Länge 11, der an seinem vorderen Ende eine Bohrerspitze 5 mit zwei Schneiden 6 zur axialen Spanabtragung aufweist. In Drehrichtung vor den Schneiden 6 ist jeweils eine gerade Spannut 7 angeordnet, die einen axialen Kanal entlang im wesentlichen des gesamten aktiven Teils 4 des Bohrers bilden. Die jeweiligen Spannuten 7 sind in bezug auf den Bohrer-Umfang so weit gezogen, daß eine fast 90°-Ausnehmung vorhanden ist. Durch die axiale Spannut wird jeweils in axialem Verlauf der vorderen Spitze der Schneide 6 auf der d1-Mantelfläche, eine Reibschneide 8 gebildet, so daß durch die zwei Schneiden 6 und die beiden vorgelagerten Spannuten 7 zwei axial verlaufende Reibschneiden 8 vorhanden sind. Die jeweiligen Schneidenrücken weisen eine Abflachung 9 auf, die jeweils einen Kreisabschnitt-Kanal 10 mit dem in unterbrochener Linie eingezeichneten Bohrloch 11 bildet.

Durch Anordnung der Spannuten 7 und der Abflachungen 9 werden zwei Führungsfasen 12 und in Verbindung mit den Schneiden 6 zwei schneidende Führungsfasen 13 gebildet. Somit sind im wesentlichen gleichmäßig auf den Umfang aufgeteilt vier Führungsfasen vorhanden.

Durch den gesamten Körper des Bohrers sind zwei axial gerichtete, zueinander parallele Kühlmittel-Bohrungen geführt, die zu den beiden Stirnseiten des Bohrers hin geöffnet sind. Die Kühlmittel-Bohrungen 14 sind so angeordnet, daß sie in bezug auf die Bohrungsspitze 5 im jeweiligen Schneidenrükkenteil so öffnen, daß einerseits die Schneiden 6 gekühlt und andererseits die Flüssigkeit durch die Spannuten 7 abfließen und gleichzeitig die Späne abtransportieren kann. Insbesondere bei Vorhandensein von viel Spanmaterial in den Spannuten 7 wird hier die Kühlflüssigkeit vorzugsweise durch die durch die Abflachungen 9 gebildeten Kanäle 10 widerstandslos abfließen, so daß der Spänetransport nicht oder nur ungenügend stattfindet.

Der in den Fig. 3 bis 5 dargestellte erfindungsgemäße Bohrer weist am Vorderende seines aktiven Teils 4 einen Reibkopf 15 auf, dessen Länge 12 ungefähr 1,5 mal die Abmessung des Bohrerdurchmessers d1 aufweist, um eine gute Führung der Bohrerspitze sicherzustellen.

Der Reibkopf 15 ist dadurch ausgebildet, daß an dem Umfang der beiden Schneidenrücken nicht wie im Stand der Technik gemäß Fig. 2 eine Abflachung 9, sondern mindestens eine, vorzugsweise drei Reibschneiden angeordnet sind.

Wie aus Fig. 4 und noch genauer aus Fig. 5 zu ersehen ist, sind zu den Haupt-Reibschneiden 8, die in den Spannuten 7 gebildet sind, durch eine 30-Grad-Aufteilung, beginnend von der Reibschneide 8, weitere drei Reibschneiden 16 so ausgebildet, daß am Rücken jeder Reibschneide 16 eine Führungsphase 17 mit dem Führungsdurchmesser des Bohrers d1 stehen bleiben, bzw. ausgebildet werden. Die so eingeformten, im wesentlichen L-förmigen Ausnehmungen 19, die vor der jeweiligen Reibschneide 18 eingearbeitet sind, sind nur sehr geringfügig, da die Tiefe "h" 18 der Ausnehmungen 19 in Abhängigkeit vom Durchmesser dl nicht mehr als 0,1 - 0,5 mm beträgt. Somit stellen die zusätzlichen sechs Ausnehmungen 19 zusammengenommen einen nur sehr geringfügigen Durchlaßquerschnitt dar, so daß die Kühlflüssigkeit nur in vernachlässigbarem Umfang durch diese Ausnehmungen 19 durchfließen kann und nahezu das gesamte Kühlflüssigkeitsvolumen durch die zwei Spannuten 7 hindurchfließt und ein optimaler Spänetransport stattfindet. Durch nunmehr acht Führungsfasen, die zudem alle acht schneidend sind, wird eine optimale Zentrierung und Führung des Bohrers sichergestellt, ohne hohe Aufwärmung und unter gleichzeitiger Erreichung von Reibqualität der Bohrung. Während bei dem herkömmlichen Bohrer gemäß Fig. 1 und 2, um bestimmte Bohrungsqualitäten zu erhalten, ein zusätzlicher Reib-Arbeitsgang notwendig ist, entfällt dieser zusätzliche Arbeitsgang durch Einsatz des erfindungsgemäßen Bohrers mit Reibkopf 15, gemäß Fig. 3 - 5.

### Bezugszeichenliste

- 1.: -
- 2.: Bohrer-Schaft
- 3.: Spannfläche
- 4.: aktiver Bohrerteil
- 5.: Bohrerspitze
- 6.: axiale Schneide
- 7.: Spannut
- 8.: Reibschneide
- 9.: Abflachung
- 10.: Kanal
- 11.: Bohrloch
- 12.: Führungsfase
- 13.: schneidende Führungsfase
- 14.: Kühlmittel-Bohrung
- 15.: Reibkopf
- 16.: Reibschneide
- 17.: Führungsfase
- 18.: Reibschneiden-Tiefe
- 19.: Ausnehmung, L-förmig
- d₁: Bohrerdurchmesser, akitver Teil
- l₁: Länge des aktiven Teils
- l₂: Länge des Reibkopfes
- h: Tiefe, Reibschneide

## Patentansprüche

1. Bohrer, insbesondere VHM-Bohrer für die Einbringung von Bohrungen mit großen Bohrtiefen ins volle Werkstückmaterial mit
- zwei stirnseitigen Schneiden zur axialen Spanabtragung mit Bohrdurchmesser d1,
- zwei geraden, axialen Spannuten,
- und jeweils einer im Rücken der Spannut vorgesehenen axial verlaufenden Abflachung, wodurch vier Führungsfasen gebildet werden, von denen zwei schneidfähig sind,
- und mit zwei axialen, stirnseitig sich öffnenden Kühlflüssigkeits-Bohrungen,
dadurch gekennzeichnet,
daß im vorderen End-Bereich des aktiven Teils (4) des Bohrers, am jeweiligen Rücken der Spannut (7) bzw. der Reibschneiden (8) mindestens eine zusätzliche, axiale Reibschneide (16) vorgesehen ist, einen Reibkopf (15) mit mindestens zwei weiteren schneidfähigen Führungsfasen (17) bildend.

2. Bohrer nach Anspruch 1, dadurch gekennzeichnet, daß vorzugsweise drei zusätzliche Reibschneiden (16) pro Haupt-Schneidenrücken vorgesehen sind und zwar vorzugsweise in gleicher Winkelaufteilung von 30°zueinander, sechs zusätzliche Führungsfasen (17) bildend.

3. Bohrer nach Anspruch 1, dadurch gekennzeichnet, daß die zusätzlichen Reibschneiden (16) eine Schneidentiefe h von 0,1 - 0,5 mm aufweisen.

4. Bohrer nach Anspruch 1, dadurch gekennzeichnet, daß die zusätzlichen Reibschneiden (16) durch axiale, L-förmige Ausnehmungen (19) gebildet sind, deren radialer, Schenkel die Schneidentiefe h darstellt.

5. Bohrer nach Anspruch 1, dadurch gekennzeichnet, daß die zusätzlichen Reibschneiden (16) und somit der Reibkopf (15) eine Länge l₂ von min. 1,5 d1 aufweisen.

6. Bohrer nach Anspruch 1, dadurch gekennzeichnet, daß bei Ausführung des Bohrers als Stufenbohrer am Anfang einer jeden Stufe einen Reibkopf (15) vorgesehen ist.

7. Bohrer nach Anspruch 1, dadurch gekennzeichnet, daß im Reibkopfbereich (12, 15) ein positiver Spiralwinkel bis zu 15° ausgeführt ist und somit die zusätzlichen Reibschneiden (16) ebenfalls den gleichen Spiralwinkel bis zu 15° aufweisen.
